# EUROPEAN PATENT APPLICATION

(11) **EP 4 770 103 A1**
(43) Date of publication of application: **01.07.2026**
(21) Application number: 24882629.9
(22) Date of filing: 02.09.2024
(51) Int. Cl.: H04N 21/4363, H04N 21/4425

(54) **ELECTRONIC DEVICE AND METHOD FOR IDENTIFYING VERSION OF HDMI CABLE**

(30) Priority: 27.10.2023 KR 20230145385
(71) Applicant: Samsung Electronics Co., Ltd., Suwon-si, Gyeonggi-do 16677 (KR)
(72) Inventor: YOO, Minjae, Suwon-si Gyeonggi-do 16677 (KR); NAM, Geonwoo, Suwon-si Gyeonggi-do 16677 (KR); LEE, Jaejeong, Suwon-si Gyeonggi-do 16677 (KR); CHOI, Myoungsang, Suwon-si Gyeonggi-do 16677 (KR)
(74) Representative: Appleyard Lees IP LLP
(86) International application number: PCT/KR2024/013125
(87) International publication number: WO 2025/089600

(57) **Abstract**

An electronic device according to an embodiment of the present disclosure may, on the basis of a high-definition multimedia interface (HDMI) cable being connected to a transmission port and a reception port of the electronic device, transmit first image data through the transmission port, receive the transmitted first image data through the reception port, determine whether the transmitted first image data and the received first image data match, and in response to matching of the transmitted first image data and the received first image data, identify a version of the HDMI cable on the basis of information associated with the received first image data, wherein the information associated with the received first image data includes at least one of resolution information, bandwidth information, and frame rate information associated with the received first image data. Another embodiment may be possible.

## Description

### [Technical Field]

The disclosure relates to an electronic device and a method for identifying a version of a high definition multimedia interface (HDMI) cable.

### [Background Art]

A first electronic device and a second electronic device may be connected through an HDMI cable. The HDMI cable may support transmitting various types of signals in a digital manner without compression. For example, the HDMI cable may support transmitting an image signal or an audio signal without compression. Further, the HDMI cable may support transmitting a control signal, thereby enabling the first electronic device to transmit the control signal to control the second electronic device.

The HDMI cable has various versions, and different performance may be supported for each version. For example, an HDMI cable of HDMI 2.0 version may transmit an image of 3840*2160 resolution (or 4K UHD image) at 60 frames per second with a bandwidth of 18Gbps. An HDMI cable of HDMI 2.1 version may transmit an image of 3840*2160 resolution at 144 frames per second with a bandwidth of 48Gbps, or transmit an image of 7680*4320 resolution (or 8K UHD image) at 60 frames per second with a bandwidth of 48Gbps.

### [Disclosure of Invention]

### [Technical Problem]

The first electronic device may transmit a signal of a specific bandwidth to the second electronic device through the HDMI cable. However, in case that the HDMI cable is a version that does not support the specific bandwidth, a problem of image quality or audio quality degradation may occur in the second electronic device even though there is no abnormality in the first electronic device or the second electronic device.

For example, in case that the specific bandwidth is 48Gbps (e.g., a bandwidth supported by an HDMI 2.1 version cable) and the HDMI cable is a version (e.g., HDMI 2.0 version) supporting a maximum bandwidth of 18Gbps, a problem of image quality or audio quality degradation may occur because the signal of the specific bandwidth is not supported by the HDMI cable. However, conventionally, there was no method to identify whether the problem of image quality or audio quality degradation was due to an abnormality in the first electronic device or the second electronic device, or due to an abnormality in the HDMI cable, making it difficult to quickly address the issues occurring in the second electronic device.

Generally, the version of the HDMI cable is not indicated on the HDMI cable, or even in case of being indicated on the HDMI cable, there is a problem that it is not accurate. For example, in case that an HDMI cable indicated as HDMI 2.1 version is an uncertified cable that is not certified for HDMI 2.1 version, the HDMI cable may not support performance (e.g., resolution or bandwidth) corresponding to HDMI 2.1 version. Therefore, identifying whether the HDMI cable has an abnormality based on the version information indicated on the HDMI cable has low accuracy and may not be conducive to problem resolution.

### [Solution to Problem]

An embodiment of the disclosure may provide an electronic device and a method for identifying a version of an HDMI cable.

An embodiment of the disclosure may provide an electronic device and a method for identifying whether an HDMI cable has an abnormality.

An embodiment of the disclosure may provide an electronic device and a method for providing performance information of an HDMI cable.

An electronic device according to an embodiment of the disclosure comprises: a transmission port; a reception port; a display; a memory storing at least one program; and at least one processor electrically connected to the memory and executing at least one instruction of a program stored in the memory, wherein the at least one processor is configured to: transmit first image data through the transmission port and receive the transmitted first image data through the reception port, based on a high definition multimedia interface (HDMI) cable being connected to the transmission port and the reception port, determine whether the transmitted first image data and the received first image data match, identify a version of the HDMI cable based on information associated with the received first image data, in response to the transmitted first image data and the received first image data matching, and the information associated with the received first image data may include at least one of resolution information, bandwidth information, or frame rate information associated with the received first image data.

According to an embodiment, the at least one processor may compare first bits corresponding to the transmitted first image data with second bits corresponding to the received first image data to determine whether the first bits and the second bits are identical by at least a set ratio, determine that the transmitted first image data and the received first image data match, in response to the first bits and the second bits being identical by at least the set ratio, and determine that the transmitted first image data and the received first image data do not match, in response to the first bits and the second bits not being identical by at least the set ratio.

According to an embodiment, in response to the transmitted first image data and the received first image data not matching, the at least one processor may control the display to display information indicating that the HDMI cable has an abnormality.

According to an embodiment, the at least one processor may control the display to display information indicating that an inspection for determining whether the HDMI cable has an abnormality or for identifying a version is started, based on the HDMI cable being connected to the transmission port and the reception port.

According to an embodiment, the at least one processor may control the display to display a first image based on the received first image data, in response to the transmitted first image data and the received first image data matching, receive a user input regarding whether there is an abnormality in the first image displayed on the display, and identify the version of the HDMI cable based on the information associated with the received first image data, in response to identifying that there is no abnormality in the first image displayed on the display based on the received user input.

According to an embodiment, the at least one processor may control the display to display information indicating that the HDMI cable has an abnormality, in response to identifying that there is an abnormality in the first image displayed on the display based on the received user input.

According to an embodiment, the at least one processor may transmit second image data having a second resolution different from a first resolution of the transmitted first image data through the transmission port, in response to identifying that there is an abnormality in the first image displayed on the display based on the received user input, receive the transmitted second image data through the reception port, determine whether the transmitted second image data and the received second image data match, identify version information of the HDMI cable based on information associated with the received second image data, in response to the transmitted second image data and the received second image data matching, and the information associated with the received second image data may include at least one of resolution information, bandwidth information, or frame rate information of the received second image data.

According to an embodiment, the second resolution may be a resolution lower than the first resolution, and the second image data may be image data based on a set order among image data for each resolution pre-stored in the memory or image data selected by the user.

According to an embodiment, the at least one processor may control the display to display information indicating that the HDMI cable has an abnormality, in response to the transmitted second image data and the received second image data not matching.

According to an embodiment, the at least one processor may control the display to display a second image based on the received second image data, in response to the transmitted second image data and the received second image data matching, receive a user input regarding whether there is an abnormality in the second image displayed on the display, identify the version of the HDMI cable based on the information associated with the received second image data, in response to identifying that there is no abnormality in the second image displayed on the display based on the received user input, and control the display to display information indicating that the HDMI cable has an abnormality, in response to identifying that there is an abnormality in the second image displayed on the display based on the received user input.

A method for an electronic device to identify a version of a high definition multimedia interface (HDMI) cable according to an embodiment of the disclosure comprises: transmitting first image data through a transmission port of the electronic device and receiving the transmitted first image data through a reception port, based on the HDMI cable being connected to the transmission port and the reception port of the electronic device; determining whether the transmitted first image data and the received first image data match; and identifying the version of the HDMI cable based on information associated with the received first image data, in response to the transmitted first image data and the received first image data matching, and the information associated with the received first image data may include at least one of resolution information, bandwidth information, or frame rate information associated with the received first image data.

According to an embodiment, the determining whether the transmitted first image data and the received first image data match may comprise: comparing first bits corresponding to the transmitted first image data with second bits corresponding to the received first image data to determine whether the first bits and the second bits are identical by at least a set ratio; determining that the transmitted first image data and the received first image data match, in response to the first bits and the second bits being identical by at least the set ratio; and determining that the transmitted first image data and the received first image data do not match, in response to the first bits and the second bits not being identical by at least the set ratio.

According to an embodiment, the method may further comprise displaying information indicating that the HDMI cable has an abnormality on the display of the electronic device, in response to the transmitted first image data and the received first image data not matching.

According to an embodiment, the method may further comprise displaying information indicating that an inspection for determining whether the HDMI cable has an abnormality or for identifying a version is started on the display of the electronic device, based on the HDMI cable being connected to the transmission port and the reception port.

According to an embodiment, the method may comprise displaying information indicating that an inspection for determining whether the HDMI cable has an abnormality or for identifying a version is started on the display of the electronic device, based on the HDMI cable being connected to the transmission port and the reception port.

According to an embodiment, the method may further comprise displaying information indicating that the HDMI cable has an abnormality on the display, in response to identifying that there is an abnormality in the first image displayed on the display based on the received user input.

According to an embodiment, the method may further comprise: transmitting second image data having a second resolution different from a first resolution of the transmitted first image data through the transmission port, in response to identifying that there is an abnormality in the first image displayed on the display based on the received user input; receiving the transmitted second image data through the reception port; determining whether the transmitted second image data and the received second image data match; and identifying the version of the HDMI cable based on information associated with the received second image data, in response to the transmitted second image data and the received second image data matching, and the information associated with the received second image data may include at least one of resolution information, bandwidth information, or frame rate information of the received second image data.

According to an embodiment, the second resolution may be a resolution lower than the first resolution, and the second image data may be image data based on a set order among image data pre-stored in the electronic device for each resolution or image data selected by the user.

According to an embodiment, the method may further comprise displaying information indicating that the HDMI cable has an abnormality on the display, in response to the transmitted second image data and the received second image data not matching.

According to an embodiment, the method may further comprise: controlling the display to display a second image based on the received second image data, in response to the transmitted second image data and the received second image data matching; receiving a user input regarding whether there is an abnormality in the second image displayed on the display; identifying the version of the HDMI cable based on the information associated with the received second image data, in response to identifying that there is no abnormality in the second image displayed on the display based on the received user input; and displaying information indicating that the HDMI cable has an abnormality on the display, in response to identifying that there is an abnormality in the second image displayed on the display based on the received user input.

The technical problems to be achieved in the disclosure are not limited to the technical problems mentioned above, and other technical problems not mentioned above may be derived from the exemplary embodiments of the disclosure by a person having ordinary skill in the art.

### [Brief Description of Drawings]

FIG. 1 is a view illustrating electronic devices connected through an HDMI cable according to an embodiment.
FIG. 2 is a view illustrating a screen associated with starting an inspection of an HDMI cable in an electronic device according to an embodiment.
FIG. 3 is a view illustrating a screen on which an image for user verification is displayed in an electronic device according to an embodiment.
FIG. 4 is a view illustrating a screen on which an electronic device displays a UI for identifying a user's verification result and displays version information of an HDMI cable according to an embodiment.
FIG. 5 is a flowchart illustrating an operation of an electronic device identifying a version of an HDMI cable based on first image data according to an embodiment.
FIG. 6 is a flowchart illustrating an operation of an electronic device checking matching of transmitted/received image data according to an embodiment.
FIG. 7 is a flowchart illustrating an operation of an electronic device identifying a version of an HDMI cable based on user verification of a first image according to an embodiment.
FIG. 8 is a flowchart illustrating an operation of an electronic device identifying a version of an HDMI cable based on second image data according to an embodiment.
FIG. 9 is a flowchart illustrating an operation of an electronic device identifying a version of an HDMI cable based on user verification of a second image according to an embodiment.
FIG. 10 is a flowchart illustrating an operation of an electronic device identifying a version of an HDMI cable based on resolution change according to an embodiment.
FIG. 11 is a flowchart illustrating another operation of an electronic device identifying a version of an HDMI cable based on resolution change according to an embodiment.
FIG. 12A is a flowchart illustrating an operation of an electronic device identifying whether an HDMI cable is HDMI 2.0 version according to an embodiment.
FIG. 12B is a flowchart illustrating an operation of an electronic device identifying whether an HDMI cable is HDMI 1.4 version according to an embodiment.
FIG. 13 is a block diagram illustrating a configuration of an electronic device according to an embodiment.

Reference may be made to the accompanying drawings in the following description, and specific examples that may be practiced are shown as examples within the drawings. Other examples may be utilized and structural changes may be made without departing from the scope of the various examples.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

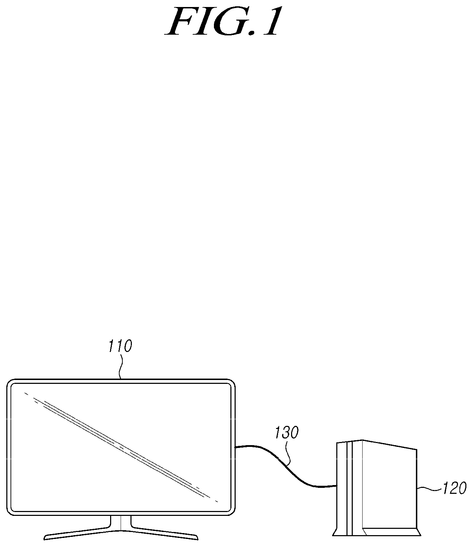

FIG. 1 is a view illustrating electronic devices connected through an HDMI cable according to an embodiment.

Referring to FIG. 1, an electronic device 110 may be connected to an external electronic device 120 using an HDMI cable 130. The HDMI cable 130 may include a plurality of (e.g., two) terminals. According to an example, a first terminal among the plurality of terminals of the HDMI cable 130 may be connected to a transmission port of the external electronic device 120, and a second terminal among the plurality of terminals of the HDMI cable 130 may be connected to a reception port of the electronic device 110.

According to an example, the external electronic device 120 may be a device such as a desktop, a laptop, a game console, or a settop box, and may be a source device transmitting image and/or audio data.

According to an example, the electronic device 110 may be a display device such as a monitor or a TV, and may be a sink device receiving and displaying image and/or audio data from the external electronic device 120.

According to an example, in case that the external electronic device 120 is a display device and the electronic device 110 is a device capable of transmitting image and/or audio data, based on a user's selection, the first terminal of the HDMI cable 130 may be connected to a transmission port of the electronic device 110, and the second terminal of the HDMI cable 130 may be connected to a reception port of the external electronic device 120. In this case, the source device may be the electronic device 110, and the sink device may be the external electronic device 120.

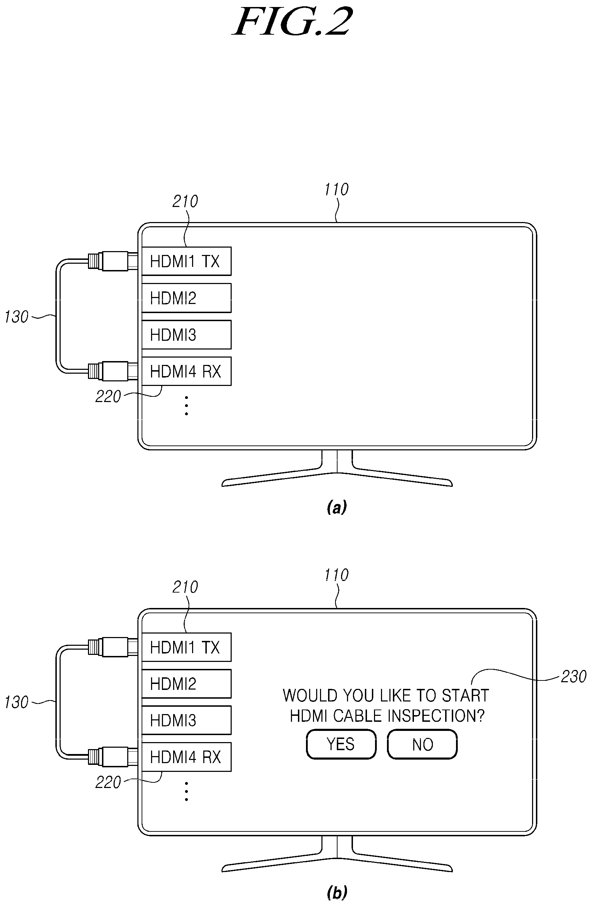

According to an example, the electronic device 110 may perform an operation for determining whether the HDMI cable 130 has an abnormality or for identifying a version. The operation of the electronic device 110 related thereto is described with reference to FIGS. 2 to 4.

FIG. 2 is a view illustrating a screen associated with starting an inspection of an HDMI cable in an electronic device according to an embodiment.

Referring to FIG. 2(a), the electronic device 110 may include one or more transmission ports and one or more reception ports to which the HDMI cable 130 may be connected. Any one of the one or more transmission ports and any one of the one or more reception ports may be used for inspecting the HDMI cable 130.

For example, a transmission port (e.g., HDMI1 TX) 210 among the one or more transmission ports and a reception port (e.g., HDMI4 RX) 220 among the one or more reception ports may be used for inspecting the HDMI cable 130. According to an example, the inspection of the HDMI cable 130 may be for identifying whether the HDMI cable 130 has an abnormality or for identifying version information of the HDMI cable 130.

According to an example, the transmission port 210 and the reception port 220 used for inspecting the HDMI cable 130 may be predetermined by the electronic device 110 or selected by the user. According to an example, the electronic device 110 may display information about the transmission port 210 and the reception port 220 on the display of the electronic device 110 so that the user may connect the HDMI cable 130 to the transmission port 210 and the reception port 220. According to an example, in case that an arbitrary transmission port and an arbitrary reception port are selected by the user, the electronic device 110 may not perform the display operation on the display.

According to an example, in case that the first terminal of the HDMI cable 130 is connected to the transmission port 210 and the second terminal of the HDMI cable 130 is connected to the reception port 220, a user interface (UI) as illustrated in FIG. 2(b) may be displayed on the display.

Referring to FIG. 2(b), the electronic device 110 may output a UI for identifying whether to start the inspection of the HDMI cable 130 to the display, in response to the HDMI cable 130 being connected to the transmission port 210 and the reception port 220. For example, the electronic device 110 may output a message "Would you like to start HDMI cable inspection?" 230 to the display and receive a user input (e.g., an input indicating "Yes" or "No") in response thereto. The user input may be a touch input on the screen of the electronic device 110. Alternatively, the user input may be received from an input device associated with the electronic device 110 (e.g., a remote controller or a stylus pen) or a control device linked with the electronic device 110 (e.g., a smartphone or a tablet).

According to an example, in case that the user input indicates starting the inspection of the HDMI cable 130, the electronic device 110 may transmit image data through the transmission port 210. The image data may be associated with any one of one or more images stored in the memory of the electronic device 110. The one or more images may be one or more test images that may be used for inspecting the HDMI cable 130. The one or more images may be determined considering performance (e.g., bandwidth information, resolution information, or frame rate (or refresh rate)) for each version of the HDMI cable. For example, in case that the one or more images are plural, the plurality of images may include images for each resolution (e.g., an image of a resolution supported by HDMI 1.4 version, an image of a resolution supported by HDMI 2.0 version, or an image of a resolution supported by HDMI 2.1 version).

According to an example, the electronic device 110 may receive the image data transmitted through the transmission port 210 through the reception port 220. The image data transmitted through the transmission port 210 may be received at the reception port 220 through the HDMI cable 130. The electronic device 110 may perform a matching check operation on the transmitted/received image data based on the transmitted image data and the received image data.

According to an example, the matching check operation may include an operation of identifying whether the transmitted image data and the received image data correspond or are identical. The matching check operation may include an operation of comparing first bits corresponding to the transmitted image data with second bits corresponding to the received image data to determine whether the first bits and the second bits are identical by at least a set ratio (e.g., 90%).

For example, the electronic device 110 may determine that the transmitted image data and the received image data match, in response to the first bits and the second bits being identical by at least the set ratio. The electronic device 110 may determine that the matching check operation has passed in case of determining that the transmitted image data and the received image data match.

For example, the electronic device 110 may determine that the transmitted image data and the received image data do not match, in response to the first bits and the second bits being identical by less than the set ratio. The electronic device 110 may determine that the matching check operation has not passed in case of determining that the transmitted image data and the received image data do not match.

According to an example, the electronic device 110 may display information indicating that the HDMI cable 130 has an abnormality on the display, in response to the matching check operation not passing.

According to an example, the electronic device 110 may identify the version of the HDMI cable 130 based on information associated with the received image data (or transmitted image data), in response to the matching check operation passing. The information associated with the received image data may be information stored in the memory of the electronic device 110 and may include at least one of resolution information, bandwidth information, or frame rate information associated with the received image data. The electronic device 110 may display the version information of the HDMI cable 130 on the display, in response to identifying the version of the HDMI cable 130.

According to an example, the electronic device 110 may perform an operation for user verification, in response to the matching check operation passing. The electronic device 110 may identify the version information of the HDMI cable based on a result of performing the operation for user verification. The operation for user verification may be performed based on, e.g., a program or application for user verification (hereinafter referred to as 'self-diagnosis application') executed in the electronic device 110.

According to an example, the self-diagnosis application may be executed by the electronic device 110 or by the user, in response to the matching check operation passing. The self-diagnosis application may be executed to display an image based on the received image data on the display and to receive verification or identification from the user regarding the quality of the displayed image. The image may be displayed on the display for a set time. The set time may be an image playback time or image display time set by the electronic device 110 or the user, and may correspond to a time during which the user may check the quality of the image displayed on the display with the naked eye.

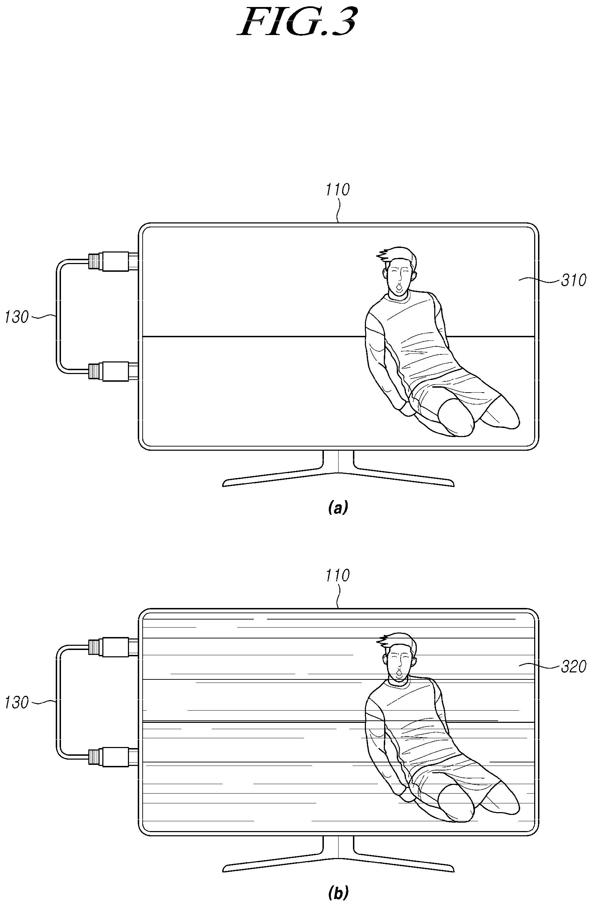

FIG. 3 is a view illustrating a screen on which an image for user verification is displayed in an electronic device according to an embodiment.

In case that the self-diagnosis application is executed in the electronic device 110, an image based on the received image data may be displayed on the display of the electronic device 110 for a set time. According to an example, the image displayed on the display of the electronic device 110 may be as illustrated in FIG. 3(a) or (b).

Referring to FIG. 3(a), the quality of the image 310 displayed on the display of the electronic device 110 may be good. For example, the image 310 displayed on the display of the electronic device 110 may not have a problem of quality degradation such as screen freezing, screen flickering, screen corruption, or audio interruption.

Referring to FIG. 3(b), the quality of the image 320 displayed on the display of the electronic device 110 may not be good. For example, the image 320 displayed on the display of the electronic device 110 may have a problem of quality degradation such as screen freezing, screen flickering, screen corruption, or audio interruption.

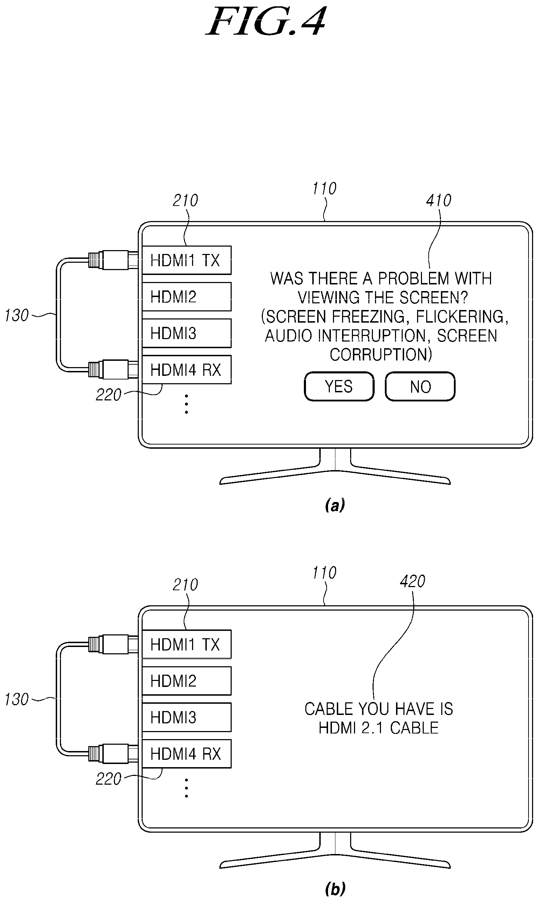

FIG. 4 is a view illustrating a screen on which an electronic device displays a UI for identifying a user's verification result and displays version information of an HDMI cable according to an embodiment.

According to an example, the electronic device 110 may display a UI as illustrated in FIG. 4(a) after displaying an image as illustrated in FIG. 3(a) or (b) on the display for a set time. For example, the electronic device 110 may display a message for identifying the user's verification result, e.g., "Was there a problem with viewing the screen? (screen freezing, flickering, audio interruption, screen corruption) (Yes/No)" 410 on the display.

In case that the user's response to the displayed message 410 indicates that there was a problem with viewing the screen (e.g., the user selected the response "Yes"), the electronic device 110 may determine that a problem of quality degradation occurred in the image due to an abnormality of the HDMI cable 130. The abnormality of the HDMI cable 130 may occur based on, e.g., the resolution of the image not being supported by the HDMI cable 130. The electronic device 110 may display information indicating that the HDMI cable 130 has an abnormality on the display. For example, the electronic device 110 may display a message "The resolution of the image is not supported by the HDMI cable." on the display.

In case that the user's response to the displayed message 410 indicates that there was no problem with viewing the screen (e.g., the user selected the response "No"), the electronic device 110 may determine that there is no abnormality in the HDMI cable 130. For example, the electronic device 110 may determine that the resolution of the image is supported by the HDMI cable 130. The electronic device 110 may identify the version information of the HDMI cable 130, in response to there being no abnormality in the HDMI cable 130. For example, the electronic device 110 may identify the version of the HDMI cable 130 based on information (e.g., at least one of resolution information, bandwidth information, or frame rate information) associated with the received image data stored in the memory.

The electronic device 110 may display a message (e.g., "The cable you have is an HDMI 2.1 cable.") 420 indicating the version of the HDMI cable 130 on the display as illustrated in FIG. 4(b), in response to the version of the HDMI cable 130 being identified. According to an example, the electronic device 110 may display performance information (e.g., at least one of resolution information, bandwidth information, or frame rate information) supported by the HDMI cable 130 on the display.

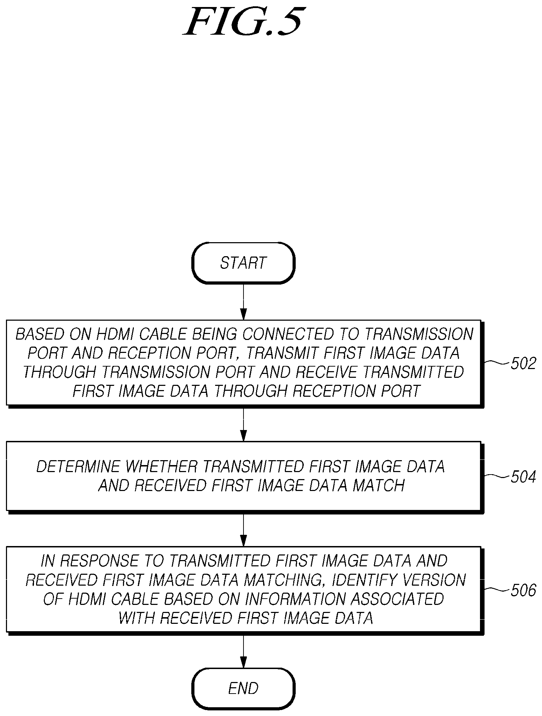

FIG. 5 is a flowchart illustrating an operation of an electronic device identifying a version of an HDMI cable based on first image data according to an embodiment.

Referring to FIG. 5, in operation 502, the electronic device 110 may transmit first image data through the transmission port 210 and receive the transmitted first image data through the reception port 220, based on the HDMI cable 130 being connected to the transmission port 210 and the reception port 220.

In operation 504, the electronic device 110 may determine whether the transmitted first image data and the received first image data match.

In operation 506, the electronic device 110 may identify the version of the HDMI cable 130 based on information associated with the received first image data, in response to the transmitted first image data and the received first image data matching. For example, the information associated with the received first image data may include at least one of resolution information, bandwidth information, or frame rate information associated with the received first image data.

According to an example, the electronic device 110 may display information indicating that the HDMI cable 130 has an abnormality on the display, in response to the transmitted first image data and the received first image data not matching.

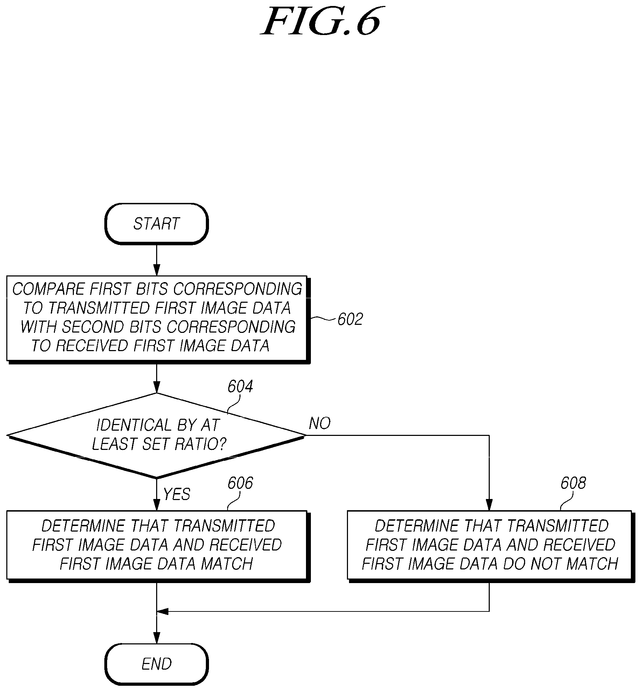

FIG. 6 is a flowchart illustrating an operation of an electronic device checking matching of transmitted/received image data according to an embodiment. According to an example, the operations illustrated in FIG. 6 may be performed in operation 504 of FIG. 5.

Referring to FIG. 6, in operation 602, the electronic device 110 may compare first bits corresponding to the transmitted first image data with second bits corresponding to the received first image data.

In operation 604, the electronic device 110 may determine whether the first bits and the second bits are identical by at least a set ratio.

In operation 606, the electronic device 110 may determine that the transmitted first image data and the received first image data match, in response to the first bits and the second bits being identical by at least the set ratio. For example, in case that the first bits are 10 bits of "1110010101 " and the second bits are 10 bits of "1110010100", the electronic device 110 may identify that 9 bits except for the last bit are identical between the first bits and the second bits. The electronic device 110 may identify 90% as an identical ratio based on 9 bits out of 10 bits being identical between the first bits and the second bits, and may determine that the transmitted first image data and the received first image data match in case that the identical ratio is at least the set ratio (e.g., 90%).

In operation 608, the electronic device 110 may determine that the transmitted first image data and the received first image data do not match, in response to the first bits and the second bits not being identical by at least the set ratio. For example, in case that the first bits are 10 bits of "0001110100" and the second bits are 10 bits of "1110010100", the electronic device 110 may identify that 5 bits are identical between the first bits and the second bits. The electronic device 110 may identify 50% as an identical ratio based on 5 bits out of 10 bits being identical between the first bits and the second bits, and may determine that the transmitted first image data and the received first image data do not match in case that the identical ratio is less than the set ratio (e.g., 90%).

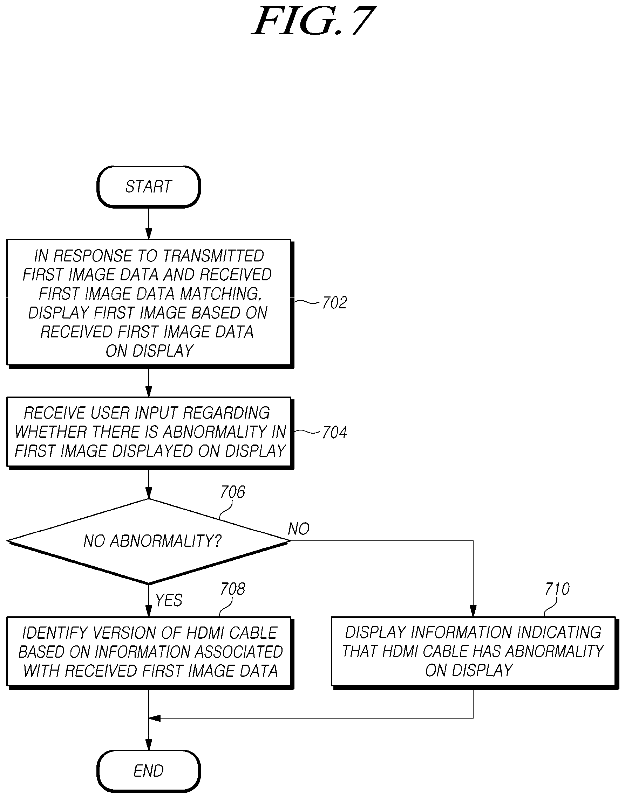

FIG. 7 is a flowchart illustrating an operation of an electronic device identifying a version of an HDMI cable based on user verification of a first image according to an embodiment.

According to an example, the electronic device 110 may perform user verification after performing the matching check operation on the transmitted/received image data, and may identify the version of the HDMI cable 130 based on the user verification. For example, the electronic device 110 may perform the operations illustrated in FIG. 7 after performing operation 504 of FIG. 5, without performing operation 506.

Referring to FIG. 7, in operation 702, the electronic device 110 may display a first image based on the received first image data on the display, in response to the transmitted first image data and the received first image data matching.

In operation 704, the electronic device 110 may receive a user input regarding whether there is an abnormality in the first image displayed on the display. Whether there is an abnormality in the first image may be related to whether there is a problem of quality degradation such as screen freezing, screen flickering, screen corruption, or audio interruption associated with the first image displayed on the display.

In operation 706, the electronic device 110 may identify whether there is an abnormality or no abnormality in the first image displayed on the display based on the user input.

In operation 708, the electronic device 110 may identify the version of the HDMI cable 130 based on the information associated with the received first image data, in response to identifying that there is no abnormality in the first image displayed on the display.

In operation 710, the electronic device 110 may display information indicating that the HDMI cable 130 has an abnormality on the display, in response to identifying that there is an abnormality in the first image displayed on the display. For example, the electronic device 110 may display information indicating that an abnormality occurred in the first image displayed on the display based on the resolution of the first image displayed on the display not being supported by the HDMI cable 130.

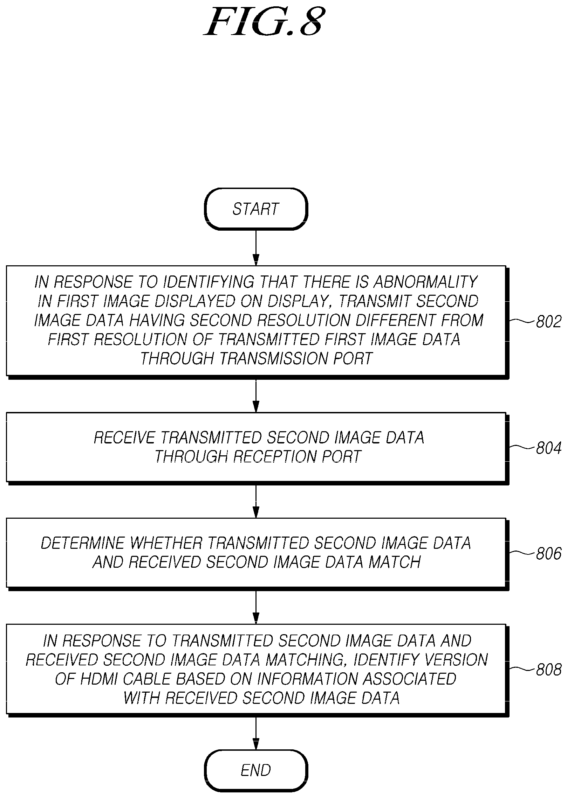

FIG. 8 is a flowchart illustrating an operation of an electronic device identifying a version of an HDMI cable based on second image data according to an embodiment. According to an example, the operations illustrated in FIG. 8 may be performed after operation 710 of FIG. 7 is performed.

Referring to FIG. 8, in operation 802, the electronic device 110 may transmit second image data having a second resolution different from a first resolution of the first image data through the transmission port 210, in response to identifying that there is an abnormality in the first image displayed on the display.

In operation 804, the electronic device 110 may receive the transmitted second image data through the reception port 220.

In operation 806, the electronic device 110 may determine whether the transmitted second image data and the received second image data match. According to an example, whether the transmitted second image data and the received second image data match may be performed based on operations similar to the operations illustrated in FIG. 6.

In operation 808, the electronic device 110 may identify the version of the HDMI cable 130 based on information associated with the received second image data, in response to the transmitted second image data and the received second image data matching.

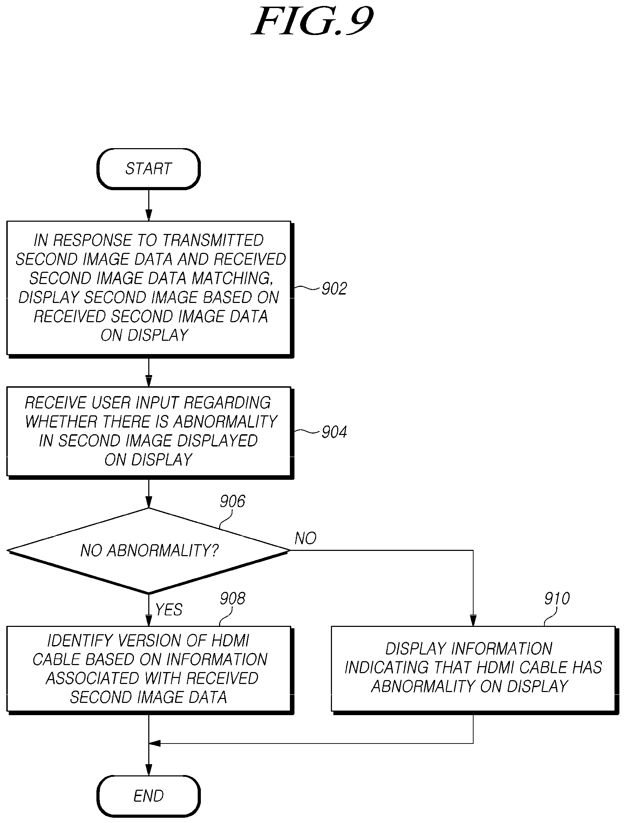

According to an example, the electronic device 110 may perform the operations illustrated in FIG. 9 without performing operation 808 after performing operation 806.

FIG. 9 is a flowchart illustrating an operation of an electronic device identifying a version of an HDMI cable based on user verification of a second image according to an embodiment.

Referring to FIG. 9, in operation 902, the electronic device 110 may display a second image based on the received second image data on the display, in response to the transmitted second image data and the received second image data matching.

In operation 904, the electronic device 110 may receive a user input regarding whether there is an abnormality in the second image displayed on the display. Whether there is an abnormality in the second image may be related to whether there is a problem of quality degradation such as screen freezing, screen flickering, screen corruption, or audio interruption associated with the second image displayed on the display.

In operation 906, the electronic device 110 may identify whether there is an abnormality or no abnormality in the second image displayed on the display based on the user input.

In operation 908, the electronic device 110 may identify the version of the HDMI cable 130 based on the information associated with the received second image data, in response to identifying that there is no abnormality in the second image displayed on the display.

In operation 910, the electronic device 110 may display information indicating that the HDMI cable 130 has an abnormality on the display, in response to identifying that there is an abnormality in the second image displayed on the display. For example, the electronic device 110 may display information indicating that an abnormality occurred in the second image displayed on the display based on the resolution of the second image displayed on the display not being supported by the HDMI cable 130.

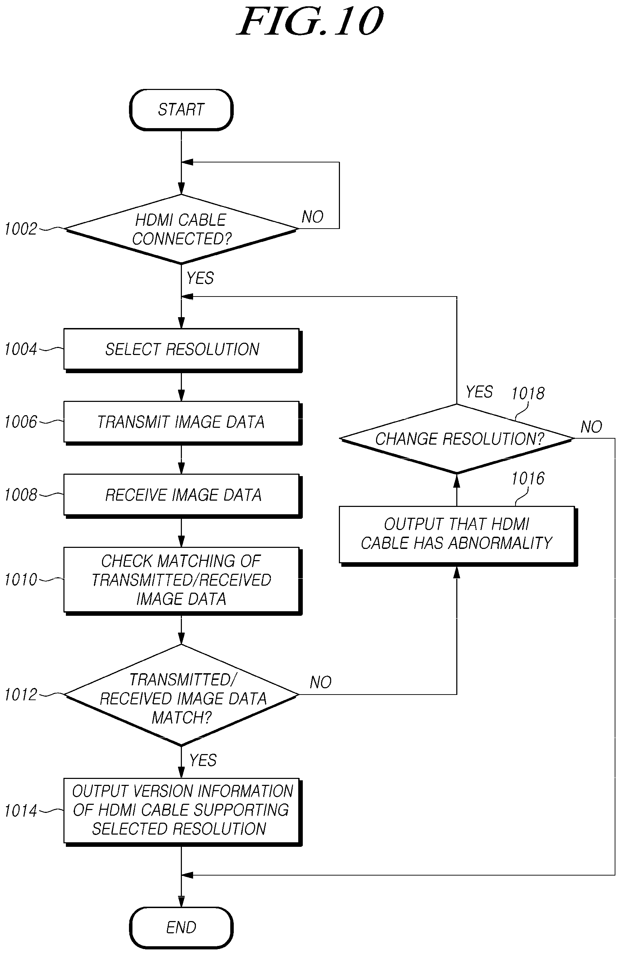

FIG. 10 is a flowchart illustrating an operation of an electronic device identifying a version of an HDMI cable based on resolution change according to an embodiment.

Referring to FIG. 10, in operation 1002, the electronic device 110 may determine whether the HDMI cable 130 is connected to the transmission port 210 and the reception port 220. According to an example, the transmission port 210 and the reception port 220 may be designated for inspecting the HDMI cable 130 or selected by the user.

In operation 1004, the electronic device 110 may select a resolution for image data to be transmitted, in response to the HDMI cable 130 being connected to the transmission port 210 and the reception port 220. According to an example, the electronic device 110 may select the resolution of the image data to be transmitted based on a user input or a set order. The user input may be, e.g., an input for selecting any one of images of different resolutions stored in the memory of the electronic device 110. The image data to be transmitted may be image data associated with any one selected image among the images of different resolutions stored in the memory. The set order may be, e.g., an order of higher resolution or an order of lower resolution.

In operation 1006, the electronic device 110 may obtain image data of the selected resolution from the memory and transmit the obtained image data through the transmission port 210.

In operation 1008, the electronic device 110 may receive the image data transmitted through the transmission port 210 through the reception port 220. Since the transmission port 210 and the reception port 220 are connected through the HDMI cable 130, the image data transmitted from the transmission port 210 may be received by the reception port 220 via the HDMI cable 130.

In operation 1010, the electronic device 110 may check the matching of the transmitted/received image data. For example, the electronic device 110 may check the matching of the transmitted/received image data by checking whether bits corresponding to the transmitted image data and bits corresponding to the received image data are identical by at least a set ratio.

In operation 1012, the electronic device 110 may determine whether the transmitted/received image data match based on the matching check result. For example, the electronic device 110 may determine that the transmitted/received image data match in case that bits corresponding to the transmitted image data and bits corresponding to the received image data are identical by at least the set ratio. For example, the electronic device 110 may determine that the transmitted/received image data do not match in case that bits corresponding to the transmitted image data and bits corresponding to the received image data are not identical by at least the set ratio.

In operation 1014, the electronic device 110 may output version information of the HDMI cable 130 supporting the selected resolution to the display, in response to the transmitted/received image data matching.

In operation 1016, the electronic device 110 may output information indicating that the HDMI cable 130 has an abnormality to the display, in response to the transmitted/received image data not matching.

In operation 1018, the electronic device 110 may determine whether to change the resolution. For example, the electronic device 110 may determine to change the resolution in case that an image of a resolution lower than the previously selected resolution is present in the memory or a user input indicating resolution change is received. For example, the electronic device 110 may determine not to change the resolution in case that an image of a resolution lower than the previously selected resolution is not present in the memory or a user input not indicating resolution change is received.

The electronic device 110 may terminate the operation in case that it is determined not to change the resolution. The electronic device 110 may proceed to operation 1004 to change the resolution in case that it is determined to change the resolution. For example, the electronic device 110 may select an image of a resolution lower than the previously selected resolution based on a set order among images stored in the memory, or select an image of a resolution selected by the user. The electronic device 110 may re-perform operations 1006 to 1018 based on the image of the changed resolution.

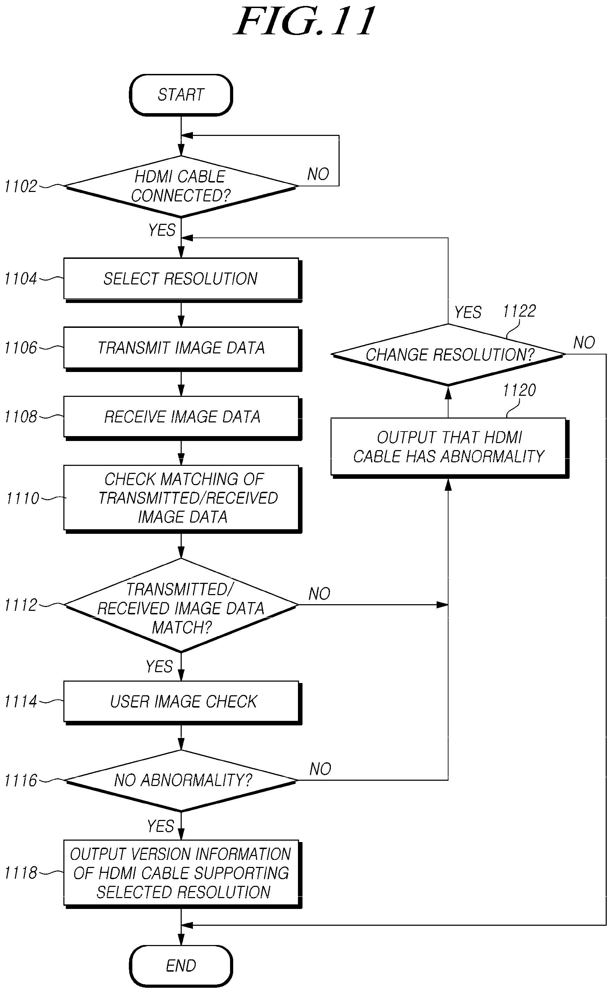

FIG. 11 is a flowchart illustrating another operation of an electronic device identifying a version of an HDMI cable based on resolution change according to an embodiment.

Referring to FIG. 11, operations 1102 to 1112 and operations 1120 and 1122 following "No" of operation 1112 correspond to operations 1002 to 1012 of FIG. 10 and operations 1016 and 1018 following "No" of operation 1012, so detailed description thereof is omitted.

Unlike FIG. 10, in FIG. 11, a verification operation by the user may be further performed to identify the version information of the HDMI cable 130. For example, the electronic device 110 may perform an operation for user image check in operation 1114, in response to the transmitted/received image data matching. According to an example, the operation for user image check may include the electronic device 110 executing the self-diagnosis application and displaying an image based on the image data received through the reception port 220 on the display for a set time. The electronic device 110 may receive a user input associated with the image displayed on the display after the set time elapses. For example, the user input may indicate whether there is quality degradation (e.g., image quality degradation such as screen freezing, screen flickering, or screen corruption and/or audio quality degradation such as audio interruption) of the image displayed on the display.

In operation 1116, the electronic device 110 may determine whether there is no abnormality in the displayed image based on the user input. For example, the electronic device 110 may determine that there is an abnormality in the displayed image in case that the user input indicates that quality degradation of the displayed image is present. For example, the electronic device 110 may determine that there is no abnormality in the displayed image in case that the user input indicates that quality degradation of the displayed image is not present.

The electronic device 110 may output the version information of the HDMI cable 130 supporting the selected resolution to the display in operation 1118, in response to there being no abnormality in the displayed image.

The electronic device 110 may output that the HDMI cable 130 has an abnormality to the display in operation 1120, in response to there being an abnormality in the displayed image. For example, the electronic device 110 may output information indicating that the HDMI cable 130 does not support the selected resolution of the displayed image to the display.

In operation 1122, the electronic device 110 may determine whether to change the resolution. For example, the electronic device 110 may determine to change the resolution in case that an image of a resolution lower than the previously selected resolution is present in the memory or a user input indicating resolution change is received. For example, the electronic device 110 may determine not to change the resolution in case that an image of a resolution lower than the previously selected resolution is not present in the memory or a user input not indicating resolution change is received.

The electronic device 110 may terminate the operation in case that it is determined not to change the resolution. The electronic device 110 may proceed to operation 1104 to change the resolution in case that it is determined to change the resolution. For example, the electronic device 110 may select an image of a resolution lower than the previously selected resolution based on a set order among images stored in the memory, or select an image having a resolution selected by the user. The electronic device 110 may re-perform operations 1106 to 1122 based on the image of the changed resolution.

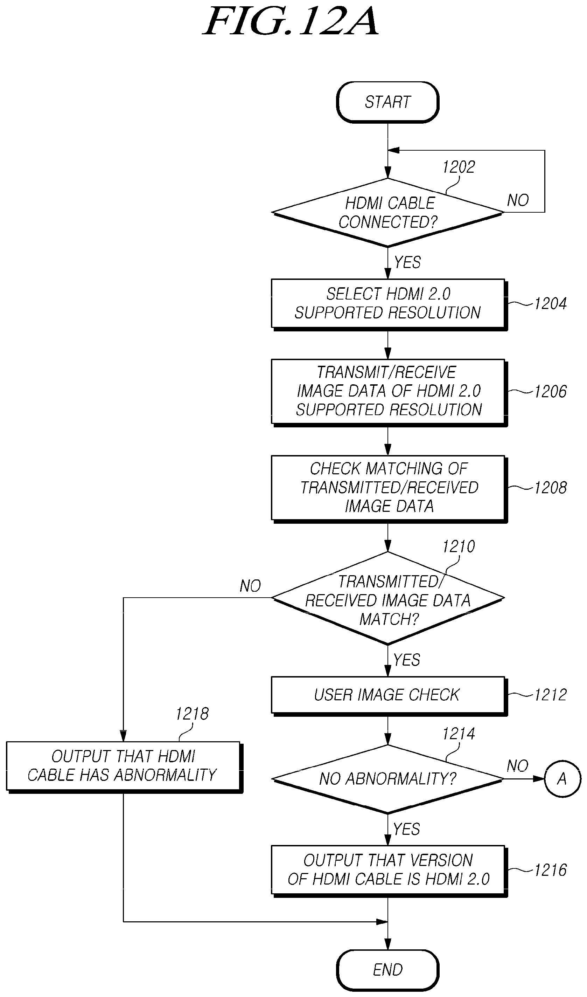

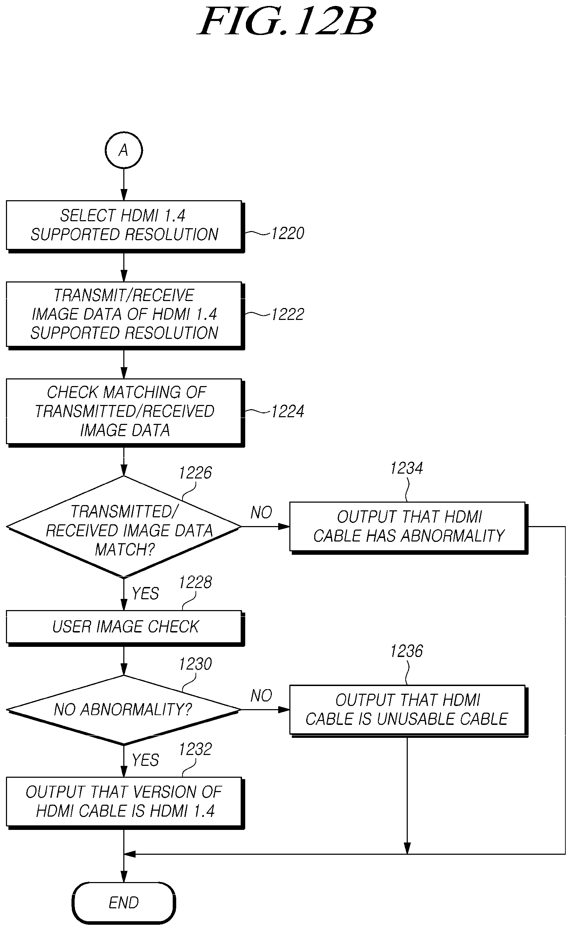

Hereinafter, an operation of the electronic device identifying whether the HDMI cable is HDMI 2.0 version or HDMI 1.4 version is described with reference to FIGS. 12A and 12B.

FIG. 12A is a flowchart illustrating an operation of an electronic device identifying whether an HDMI cable is HDMI 2.0 version according to an embodiment.

Referring to FIG. 12A, in operation 1202, the electronic device 110 may determine whether the HDMI cable 130 is connected to the transmission port 210 and the reception port 220. According to an example, the transmission port 210 and the reception port 220 may be designated for inspecting the HDMI cable 130 or selected by the user.

In operation 1204, the electronic device 110 may select a resolution of image data to be transmitted, in response to the HDMI cable 130 being connected to the transmission port 210 and the reception port 220. According to an example, the electronic device 110 may select a resolution corresponding to the version of the HDMI cable 130 to be identified. For example, the electronic device 110 may select a resolution supported by HDMI 2.0 version (hereinafter referred to as 'HDMI 2.0 supported resolution') to identify whether the HDMI cable 130 is HDMI 2.0 version. The electronic device 110 may obtain an image of the HDMI 2.0 supported resolution from the memory.

In operation 1206, the electronic device 110 may transmit/receive image data corresponding to the image of the HDMI 2.0 supported resolution. For example, the electronic device 110 may transmit the image data through the transmission port 210 and receive the transmitted image data through the reception port 220.

In operation 1208, the electronic device 110 may check the matching of the transmitted/received image data. For example, the electronic device 110 may check the matching of the transmitted/received image data by checking whether bits corresponding to the transmitted image data and bits corresponding to the received image data are identical by at least a set ratio.

In operation 1210, the electronic device 110 may determine whether the transmitted/received image data match based on the matching check result. For example, the electronic device 110 may determine that the transmitted/received image data match in case that bits corresponding to the transmitted image data and bits corresponding to the received image data are identical by at least the set ratio. For example, the electronic device 110 may determine that the transmitted/received image data do not match in case that bits corresponding to the transmitted image data and bits corresponding to the received image data are not identical by at least the set ratio.

The electronic device 110 may proceed to operation 1212 in case that the transmitted/received image data match, and may proceed to operation 1218 to output that the HDMI cable 130 has an abnormality to the display in case that the transmitted/received image data do not match.

In operation 1212, the electronic device 110 may perform an operation for user image check, in response to the transmitted/received image data matching. According to an example, the operation for user image check may include the electronic device 110 executing the self-diagnosis application and displaying an image received through the reception port 220 on the display for a set time. For example, the electronic device 110 may display an image based on the image data of the HDMI 2.0 supported resolution on the display for a set time so that image check is performed by the user. The electronic device 110 may receive a user input associated with the image displayed on the display after the set time elapses. For example, the user input may indicate whether there is quality degradation (e.g., image quality degradation such as screen freezing, screen flickering, or screen corruption and/or audio quality degradation such as audio interruption) of the image displayed on the display.

In operation 1214, the electronic device 110 may determine whether there is no abnormality in the image displayed on the display based on the user input. For example, the electronic device 110 may determine that there is an abnormality in the displayed image in case that the user input indicates that quality degradation of the displayed image is present. For example, the electronic device 110 may determine that there is no abnormality in the image in case that the user input indicates that quality degradation of the displayed image is not present.

In operation 1216, the electronic device 110 may determine that the HDMI cable 130 supports the HDMI 2.0 supported resolution, in response to there being no abnormality in the displayed image, and output that the version of the HDMI cable 130 is HDMI 2.0 to the display.

The electronic device 110 may perform the operations of FIG. 12B indicated by "A", in response to there being an abnormality in the displayed image.

FIG. 12B is a flowchart illustrating an operation of an electronic device identifying whether an HDMI cable is HDMI 1.4 version according to an embodiment.

According to an example, the electronic device 110 may perform operation 1220 of FIG. 12B, in response to there being an abnormality in the displayed image in operation 1214 of FIG. 12A.

Referring to FIG. 12B, in operation 1220, the electronic device 110 may determine that the HDMI cable 130 does not support the HDMI 2.0 supported resolution and select a resolution different from the HDMI 2.0 supported resolution. For example, the electronic device 110 may select a resolution supported by HDMI 1.4 version (hereinafter referred to as 'HDMI 1.4 supported resolution'), which is a resolution lower than the HDMI 2.0 supported resolution. The electronic device 110 may obtain an image of the HDMI 1.4 supported resolution from the memory.

In operation 1222, the electronic device 110 may transmit/receive image data corresponding to the image of the HDMI 1.4 supported resolution. For example, the electronic device 110 may transmit the image data of the HDMI 1.4 supported resolution through the transmission port 210 and receive the transmitted image data through the reception port 220.

In operation 1224, the electronic device 110 may check the matching of the transmitted/received image data. For example, the electronic device 110 may check the matching of the transmitted/received image data by checking whether bits corresponding to the transmitted image data and bits corresponding to the received image data are identical by at least a set ratio.

In operation 1226, the electronic device 110 may determine whether the transmitted/received image data match based on the matching check result. For example, the electronic device 110 may determine that the transmitted/received image data match in case that bits corresponding to the transmitted image data and bits corresponding to the received image data are identical by at least the set ratio. For example, the electronic device 110 may determine that the transmitted/received image data do not match in case that bits corresponding to the transmitted image data and bits corresponding to the received image data are not identical by at least the set ratio.

The electronic device 110 may proceed to operation 1228 in case that the transmitted/received image data match, and may proceed to operation 1234 to output that the HDMI cable has an abnormality to the display in case that the transmitted/received image data do not match.

In operation 1228, the electronic device 110 may perform an operation for user image check, in response to the transmitted/received image data matching. For example, the electronic device 110 may display an image based on the image data of the HDMI 1.4 supported resolution on the display for a set time so that image check is performed by the user. The electronic device 110 may receive a user input associated with the image displayed on the display after the set time elapses. For example, the user input may indicate whether there is quality degradation (e.g., image quality degradation such as screen freezing, screen flickering, or screen corruption and/or audio quality degradation such as audio interruption) of the image displayed on the display.

In operation 1230, the electronic device 110 may determine whether there is no abnormality in the image displayed on the display based on the user input. For example, the electronic device 110 may determine that there is an abnormality in the displayed image in case that the user input indicates that quality degradation of the displayed image is present. For example, the electronic device 110 may determine that there is no abnormality in the image in case that the user input indicates that quality degradation of the displayed image is not present.

In operation 1232, the electronic device 110 may determine that the HDMI cable 130 supports the HDMI 1.4 supported resolution, in response to there being no abnormality in the displayed image, and output that the version of the HDMI cable 130 is HDMI 1.4 to the display.

In operation 1236, the electronic device 110 may output that the HDMI cable 130 is an unusable cable to the display, in response to there being an abnormality in the displayed image. According to an example, in case that an image of a resolution different from HDMI 1.4 version (e.g., a resolution lower than the HDMI 1.4 supported resolution) is present in the memory, the electronic device 110 may also perform operations similar to operations 1220 to 1236 by changing the resolution.

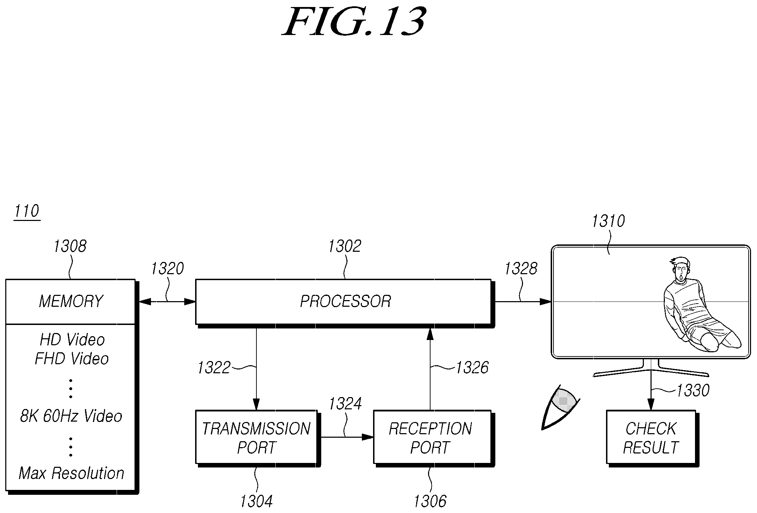

FIG. 13 is a block diagram illustrating a configuration of an electronic device according to an embodiment.

Referring to FIG. 13, the electronic device 110 may include a processor 1302, a transmission port 1304, a reception port 1306, a memory 1308, and a display 1310. According to an example, the electronic device 110 may include additional components (e.g., an audio output unit or a communication unit) other than the illustrated components, or may omit at least one of the illustrated components.

The transmission port 1304 may be connected to a first terminal among the plurality of (e.g., two) terminals of the HDMI cable 130 and may be referred to as an HDMI transmission port. According to an example, the transmission port 1304 may be one or more and may correspond to the transmission port 210 of FIG. 2.

The reception port 1306 may be connected to a second terminal different from the first terminal among the plurality of terminals of the HDMI cable 130 and may also be referred to as an HDMI reception port. According to an example, the reception port 1304 may be one or more and may correspond to the reception port 220 of FIG. 2.

The memory 1308 may store various information or data, an application (e.g., the self-diagnosis application), or at least one program associated with the operation of the electronic device 110. According to an example, the memory 1308 may store one or more images (or image data) for inspecting the HDMI cable 130 and information (e.g., resolution information, bandwidth information, or frame rate information) associated with the one or more images. For example, the memory 1308 may store images for each resolution supported by each version of the HDMI cable (e.g., HD video, FHD video, ..., 8K 60Hz video, ..., max resolution video (an image of a resolution supported by the latest version of the HDMI cable)). According to an example, the memory 1308 may be an embedded multimedia card (eMMC).

The display 1310 may perform various display operations according to functions of the electronic device 110. According to an example, the display 1310 may display an image, or display the version information of the HDMI cable 130 or information indicating whether the HDMI cable 130 has an abnormality.

The processor 1302 may be electrically or operatively connected to the transmission port 1304, the reception port 1306, the memory 1308, and the display 1310, and may execute at least one instruction of a program stored in the memory 1308. The processor 1302 may be one or more and may be a main system on chip (SoC).

According to an example, the processor 1302 may perform the operations of the electronic device 112 described above (e.g., the operations of the electronic device 110 described in connection with FIGS. 2 to 12B).

According to an example, the processor 1302 may perform the following operations.

In operation 1320, the processor 1302 may obtain image data from the memory 1308. For example, the processor 1302 may obtain image data associated with any one of images for each resolution stored in the memory 1308. The image data may be obtained based on a resolution selected by the user or a resolution selected based on a set order.

In operation 1322, the processor 1302 may transfer the obtained image data to the transmission port 1304 through a transmit path. According to an example, the transmit path may be a path from the processor 1302 to the transmission port 1304, may be an HDMI TX port path, and may be a transition minimized differential signaling (TMDS) line.

In operation 1324, the processor 1302 may control the transmission port 1304 to transmit the obtained image data.

In operation 1324, the processor 1302 may control the reception port 1306 to receive the image data transmitted from the transmission port 1304. According to an example, since the transmission port 1304 and the reception port 1306 are connected through the HDMI cable 130, the image data transmitted from the transmission port 1304 may be received by the reception port 1306 via the HDMI cable 130.

In operation 1326, the processor 1302 may receive the image data received by the reception port 1306 through a receive path. According to an example, the receive path may be a path from the reception port 1306 to the processor 1302, may be an HDMI RX port path, and may be a TMDS line. According to an example, the processor 1302 may perform a matching check between the image data transmitted from the transmission port 1304 and the image data received by the reception port 1306.

In operation 1328, the processor 1302 may transfer the received image data to the display 1310 for user verification in case that the matching check has passed. The processor 1302 may control the display 1310 so that an image based on the transferred image data is displayed for a set time. According to an example, the set time may include a time for receiving identification or verification from the user regarding whether there is an abnormality (e.g., whether quality degradation occurs) in the image displayed on the display 1310. The user may check the image displayed on the display 1310 with the naked eye during the set time. The processor 1302 may receive an check result from the user after the set time elapses. The processor 1302 may determine whether the HDMI cable 130 has an abnormality based on the check result from the user.

In operation 1330, the processor 1302 may display an check result based on whether the HDMI cable 130 has an abnormality on the display 1310. According to an example, in case that the check result from the user indicates that there is no abnormality in the image displayed on the display 1310, the processor 1302 may identify the version of the HDMI cable 130 based on information (e.g., resolution information, bandwidth information, or frame rate information) associated with the image and display information about the identified version on the display 1310.

According to an example, in case that the check result from the user indicates that there is an abnormality in the image displayed on the display 1310, the processor 1302 may output information indicating that the HDMI cable 130 has an abnormality to the display 1310.

Based on the operation and configuration of the electronic device 110 described above, the following conveniences may be provided to the user.

The user may easily identify the version and performance of the HDMI cable using HDMI ports (e.g., the transmission port 210 and the reception port 220 of FIG. 2, or the transmission port 1304 and the reception port 1306 of FIG. 13) without additional components such as an adapter.

The user may easily identify whether a problem occurring on the screen displayed on the display is a problem of the HDMI cable or a problem of the electronic device 110 or the external electronic device 120.

In case that it is identified through self-diagnosis that the HDMI cable has a problem, the user may obtain an HDMI cable of a version higher than the HDMI cable in which the problem occurred to address the issues without separate after-sales service.

The user may identify not only whether the HDMI cable has an abnormality but also whether the HDMI ports have failed through the matching check of the transmitted/received image data between the HDMI ports.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a transmission port;
a reception port;
a display;
a memory storing at least one program; and
at least one processor electrically connected to the memory and executing at least one instruction of a program stored in the memory, wherein the at least one processor is configured to:
transmit first image data through the transmission port and receive the transmitted first image data through the reception port, based on a high definition multimedia interface (HDMI) cable being connected to the transmission port and the reception port;
determine whether the transmitted first image data and the received first image data match; and
identify a version of the HDMI cable based on information associated with the received first image data, in response to the transmitted first image data and the received first image data matching,
wherein the information associated with the received first image data includes at least one of resolution information, bandwidth information, or frame rate information associated with the received first image data.

2. The electronic device of claim 1, wherein the at least one processor is configured to:
compare first bits corresponding to the transmitted first image data with second bits corresponding to the received first image data to determine whether the first bits and the second bits are identical by at least a set ratio;
determine that the transmitted first image data and the received first image data match, in response to the first bits and the second bits being identical by at least the set ratio; and
determine that the transmitted first image data and the received first image data do not match, in response to the first bits and the second bits not being identical by at least the set ratio.

3. The electronic device of claim 1, wherein the at least one processor is configured to control the display to display information indicating that the HDMI cable has an abnormality, in response to the transmitted first image data and the received first image data not matching.

4. The electronic device of claim 1, wherein the at least one processor is configured to control the display to display information indicating that an inspection for determining whether the HDMI cable has an abnormality or for identifying a version is started, based on the HDMI cable being connected to the transmission port and the reception port.

5. The electronic device of claim 1, wherein the at least one processor is configured to:
control the display to display a first image based on the received first image data, in response to the transmitted first image data and the received first image data matching;
receive a user input regarding whether there is an abnormality in the first image displayed on the display; and
identify the version of the HDMI cable based on the information associated with the received first image data, in response to identifying that there is no abnormality in the first image displayed on the display based on the received user input.

6. The electronic device of claim 5, wherein the at least one processor is configured to control the display to display information indicating that the HDMI cable has an abnormality, in response to identifying that there is an abnormality in the first image displayed on the display based on the received user input.

7. The electronic device of claim 5, wherein the at least one processor is configured to:
transmit second image data having a second resolution different from a first resolution of the transmitted first image data through the transmission port, in response to identifying that there is an abnormality in the first image displayed on the display based on the received user input;
receive the transmitted second image data through the reception port;
determine whether the transmitted second image data and the received second image data match; and
identify version information of the HDMI cable based on information associated with the received second image data, in response to the transmitted second image data and the received second image data matching, and wherein the information associated with the received second image data includes at least one of resolution information, bandwidth information, or frame rate information of the received second image data.

8. The electronic device of claim 7, wherein the second resolution is a resolution lower than the first resolution, and wherein the second image data is image data based on a set order among image data for each resolution pre-stored in the memory or image data selected by the user.

9. The electronic device of claim 8, wherein the at least one processor is configured to control the display to display information indicating that the HDMI cable has an abnormality, in response to the transmitted second image data and the received second image data not matching.

10. The electronic device of claim 7, wherein the at least one processor is configured to:
control the display to display a second image based on the received second image data, in response to the transmitted second image data and the received second image data matching;
receive a user input regarding whether there is an abnormality in the second image displayed on the display;
identify the version of the HDMI cable based on the information associated with the received second image data, in response to identifying that there is no abnormality in the second image displayed on the display based on the received user input; and
control the display to display information indicating that the HDMI cable has an abnormality, in response to identifying that there is an abnormality in the second image displayed on the display based on the received user input.

11. A method for an electronic device to identify a version of a high definition multimedia interface (HDMI) cable, the method comprising:
transmitting first image data through a transmission port of the electronic device and receiving the transmitted first image data through a reception port, based on the HDMI cable being connected to the transmission port and the reception port of the electronic device;
determining whether the transmitted first image data and the received first image data match; and
identifying the version of the HDMI cable based on information associated with the received first image data, in response to the transmitted first image data and the received first image data matching,
wherein the information associated with the received first image data includes at least one of resolution information, bandwidth information, or frame rate information associated with the received first image data.

12. The method of claim 11, wherein the determining whether the transmitted first image data and the received first image data match comprises:
comparing first bits corresponding to the transmitted first image data with second bits corresponding to the received first image data to determine whether the first bits and the second bits are identical by at least a set ratio;
determining that the transmitted first image data and the received first image data match, in response to the first bits and the second bits being identical by at least the set ratio; and
determining that the transmitted first image data and the received first image data do not match, in response to the first bits and the second bits not being identical by at least the set ratio.

13. The method of claim 11, further comprising:
displaying information indicating that the HDMI cable has an abnormality on a display of the electronic device, in response to the transmitted first image data and the received first image data not matching.

14. The method of claim 11, further comprising:
displaying information indicating that an inspection for determining whether the HDMI cable has an abnormality or for identifying a version is started on a display of the electronic device, based on the HDMI cable being connected to the transmission port and the reception port.

15. The method of claim 11, wherein the identifying the version of the HDMI cable comprises:
displaying a first image based on the received first image data on a display of the electronic device, in response to the transmitted first image data and the received first image data matching;
receiving a user input regarding whether there is an abnormality in the first image displayed on the display; and
identifying the version of the HDMI cable based on the information associated with the received first image data, in response to identifying that there is no abnormality in the first image displayed on the display based on the received user input.
